# EUROPEAN PATENT APPLICATION

(11) **EP 0 842 819 A1**
(43) Date of publication of application: **20.05.1998**
(21) Application number: 96925967.0
(22) Date of filing: 01.08.1996
(51) Int. Cl.: B60R 1/06

(54) **AUTOMOTIVE DOOR MIRROR**

(30) Priority: 04.08.1995 JP 199394/95
(71) Applicant: KABUSHIKI KAISHA TOKAI-RIKA-DENKI-SEISAKUSHO, Niwa-gun, Aichi-ken 480-01 (JP)
(72) Inventor: OGASAWARA, Morihiko Kabushiki Kaisha Tokai Rika, Oguchi-cho, Niwa-gun Aichi 480-01 (JP); TSUJIUCHI, Yoshio Kabushiki Kaisha Tokai Rika, Oguchi-cho, Niwa-gun Aichi 480-01 (JP); YAMADA, Takashi Kabushiki Kaisha Tokai Rika, Oguchi-cho, Niwa-gun Aichi 480-01 (JP)
(74) Representative: Glawe, Delfs, Moll & Partner
(86) International application number: JP9602167
(87) International publication number: WO9706033

(57) **Abstract**

An automotive door mirror having a configuration superior in wire connection efficiency to the wiring on automotive body side. A visor side relay connector (9) is mounted on a leading end of a wiring code (8) pulled out from a visor assembly (2). A relay connector (10) is mounted on a stay in advance. A stay side relay connector (10) for connection to the visor side relay connector (9) is connected to an inner end of the relay connector (10), while a connector (11) for connection to the wiring on the vehicle side is connected to an outer end thereof. The stay (1) is has a holding wall (13a) for holding the connected two relay connectors (9, 10) at a position between a connecting surface (4a) of the visor assembly (2) and the stay (1) and a fixing surface (4a) of the stay and the door.

## Description

### TECHNICAL FIELD

The present invention relates to a door mirror assembly for a vehicle and more particularly to an improved door mirror assembly for a vehicle having a construction allowing an efficient operation of connecting wires at a vehicle body side and wires at a door mirror side with each other.

### BACKGROUND ART

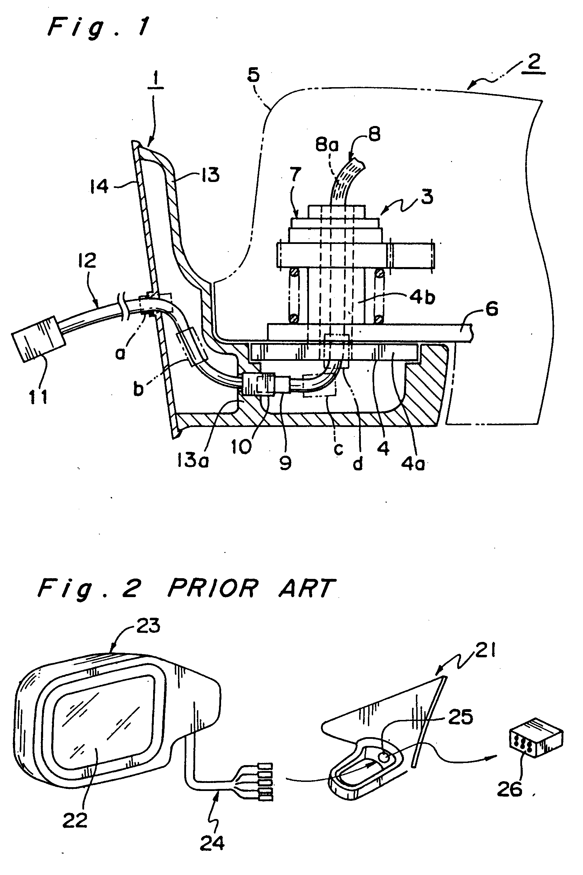

Conventionally and generally, as shown in Fig. 2 which is an exploded perspective view, a door mirror assembly for a vehicle comprises a stay 21 fixed to a door of the vehicle; and a visor 23 which holds a mirror plate 22 angle-adjustably and which is pivotally supported on the stay 21. The visor 23 is constituted as an assembly having five - nine cords 24 extended from an electric visor-folding mechanism (driving mechanism for pivoting the visor 23 with respect to the stay 21 between a use position and a fold position) accommodated therein and a mirror angle-adjusting mechanism (driving mechanism for pivoting the mirror plate 22 with respect to the visor 23 on a horizontal axis and a vertical axis) accommodated therein. The visor assembly 23 is installed on the stay 21, which has been previously fixed to the door, in a vehicle-assembling process.

In the assembling operation, after the cords 24 are inserted one by one into an opening 25 formed on the stay 21, each of the cords 24 is installed on the housing of a connector 26. Then, the connector 26 is introduced into the inner side of a door panel and then, connected with a connector (not shown) at a vehicle body side. The reason the cords 24 are installed on the connector 26 after they are inserted into the opening 25 of the stay 21 is because an opening so large as to allow the connector 26 to be inserted thereinto cannot be formed on the stay 21.

However, the construction necessitates the inefficient operation of inserting each of the cords 24 into the opening 25 of the stay 21 and in addition, necessitates the inefficient operation of installing all of the cords 24 on the connector housing 26 and then connecting them with the wires at the vehicle body side. That is, the conventional door mirror for a vehicle has a problem in that the operation of installing the visor assembly 23 on the stay 21 is very inefficiently performed due to the wire-connecting operation.

Accordingly, it is an object of the present invention to provide a door mirror assembly for a vehicle having a novel construction facilitating a wire connection between wires at a vehicle body side and wires at a door mirror side in a vehicle-assembling process.

### DISCLOSURE OF THE INVENTION

In order to achieve the object, the door mirror for a vehicle according to the present invention is constructed as follows:

That is, the door mirror assembly comprises a stay which is fixed to a door of the vehicle and a visor assembly which is supported by the stay. A cord connected with the visor assembly is extended through the stay and a door panel of the vehicle body and connected with a wire at a body side of the vehicle.

The cord comprises a wiring cord extended from the visor assembly and a relay cord installed on the stay in advance. A visor side relay connector is installed on the wiring cord at an end thereof. The relay cord has a stay side relay connector which is installed at an inner end thereof and which is connected with the visor side relay connector; and a connector which is installed at an outer end thereof and which is connected with the wire at the vehicle body side.

The door mirror assembly further comprises a holding means holding the visor side relay connector and the stay side relay connector connected with each other at a position located between a connection surface between the visor assembly and the stay, and a fixing surface between the stay and the door.

In the above-described construction, in a parts-assembling stage, the relay cord is installed on the stay which is one of the parts. Thus, in a vehicle-assembling operation, the visor assembly is installed on the stay in the following procedure.

Initially, the stay to which the relay cord has been attached is fixed to the door of the vehicle. Then, the visor side relay connector and the stay side relay connector are connected with each other. At this time, both relay connectors connected with each other are held by the holding means at a position located between the connection surface between the visor and the stay, and the fixing surface between the stay and the door. Then, the visor assembly is installed on the stay. Then, the connector installed on the relay cord at the vehicle body side thereof is connected with the wire at the vehicle body side.

It is possible to install the visor side relay connector in advance on the cord extended from the visor assembly because the relay cord is installed on the stay in advance. Accordingly, at one touch, the visor side relay connector can be connected with the stay side relay connector installed on the relay cord. That is, the construction of the present invention eliminates the need for inserting cords into the opening of the stay one by one in the vehicle-assembling operation, thus allowing a wire connection to be accomplished by merely connecting both relay connectors with each other at both sides of the relay cord. Therefore, the visor assembly can be efficiently installed on the stay.

Further, the construction allows a pair of the relay connectors which are connected with each other to be held in the stay by the holding means, thus preventing the relay connectors from being moved inside the stay while the vehicle is traveling and preventing noises from being generated.

In the construction, the stay comprises a stay body supporting the visor assembly; and a fixed plate which is continuous with the stay body and fixed to the door, similarly to the conventional construction.

The holding means may consist of a holding wall formed inside the stay body. As a modification, the holding means may consist of the fixed plate of the stay or a stand provided inside the visor assembly and fixed to the stay body.

### BRIEF DESCRIPTION OF THE DRAWINGS

Fig. 1 is a sectional view showing a door mirror assembly for a vehicle according to an embodiment of the present invention; and
Fig. 2 is an exploded perspective view showing the above-described conventional door mirror assembly.

### BEST MODE FOR CARRYING OUT THE INVENTION

A door mirror for a vehicle according to an embodiment of the present invention will be described below in detail with reference to Fig. 1.

As shown in Fig. 1, the door mirror assembly comprises a stay 1 which is fixed to a door (not shown) of a vehicle and a visor assembly 2 which is supported by the stay 1. The visor assembly 2 has an electric visor-folding mechanism 3. The electric visor-folding mechanism 3 has a construction in which a bracket 6 holding a visor body 5 rotatably is installed on a fixed shaft 4b of a stand 4 having a substrate 4a which is fixed to the stay 1, and driving parts 7 such as a motor and a reduction mechanism (detailed drawing is not shown) is installed on the bracket 6. The visor assembly 2 has a mirror plate angle-adjusting mechanism (not shown). A plurality of wiring cords 8a of the electric visor-folding mechanism 3 and those of the mirror plate angle-adjusting mechanism are bundled to compose them as a wire harness 8. A visor side relay connector 9 is installed at an end of the wire harness 8.

The stay 1 comprises a stay body 13 to which the substrate 4a is fixed; and a fixed plate 14 which is integral with the stay body 13 and fixed to the door. The stay 1 has a relay cord 12 having a stay side relay connector 10 which is positioned at the inner end thereof and which is connected with the visor side relay connector 9; and a connector 11 which is positioned at the outer end thereof and which is connected with wires at a vehicle body side. The relay cord 12 is installed on the stay 1 in advance in a parts-manufacturing process. The relay cord 12 is held by the stay body 13 by mounting the stay side relay connector 10 on a holding wall 13a formed as a holding means. The connector 11 which is connected with the wires at the vehicle body side projects from the fixed plate 14.

In a vehicle-assembling process, initially, the stay 1 of the door mirror having the above-described construction is fixed to the door of the vehicle. The operation of installing the visor assembly 2 on the stay 1 is completed when the substrate 4a of the stand 4 is fixed to the stay 1 after the visor side relay connector 9 is connected with the stay side relay connector 10. Because the visor side relay connector 9 and the stay side relay connector 10 connected with each other are held at a predetermined position by the holding wall 13a, it is possible to prevent the visor side relay connector 9 and the stay side relay connector 10 from being moved inside the stay 1 during the travel of the vehicle.

As described above, using the relay cord 12, the construction allows the connector 9 to be installed in advance on the cords 8a extended from the visor assembly 2, thus eliminating the operation of inserting the cords 8a into the opening of the stay 1 one by one. Because the wire connection can be accomplished by only connecting the relay connector 9 with one side of the relay cord 12 and the relay connector 10 with the other side thereof, it is possible to efficiently perform the operation of installing the visor assembly 2 on the stay 1.

In the above-described construction, the position at which the relay connectors 9 and 10 are connected with each other can be set to an arbitrary position (for example, positions shown by a, b, c, and d of Fig. 1) provided that the connection position thereof is located between a surface of the fixed plate 14, of the stay 1, which is fixed to the door and the substrate 4a constituting the connection surface between the visor assembly 2 and the stay 1. Of the positions a, b, c, and d, supposing that the relay connectors 9 and 10 are connected with each other at the position d, the housing of the connector 9 having a diameter smaller than the inner diameter of the fixed shaft 4b is used. In the above-described construction, the stay side relay connector 10 is held in advance by the holding wall 13a serving as the holding means. Instead, it is possible to adopt a construction in which the holding means holds the relay connectors 9 and 10 connected with each other by fitting them thereinto. Further, supposing that the relay connectors 9 and 10 are connected with each other at the position d, it is possible to form a construction in which the visor side relay connector 9 is held by the stand 4, and the stay side relay connector 10 is connected with the visor side relay connector 9.

## Claims

1. In a door mirror assembly for a vehicle comprising a stay (1) which is fixed to a door of the vehicle and a visor assembly (2) which is supported by the stay (1), wherein a cord connected with the visor assembly (2) is extended through the stay (1) and a door panel of the vehicle and connected with a wire at a vehicle body side,
the cord comprises a wiring cord (8) extended from the visor assembly (2); and a relay cord (12) installed on the stay (1) in advance;
a visor side relay connector (9) is positioned on the wiring cord (8) at an end thereof;
the relay cord (12) has a stay side relay connector (10) which is installed at an inner end thereof and which is connected with the visor side relay connector (9), and a connector (11) which is installed at an outer end thereof and which is connected with the wire at the vehicle body side; and
the door mirror further comprises a holding means (13a) holding the visor side relay connector (9) and the stay side relay connector (10) connected with each other at a position located between a connection surface, between the visor assembly (2) and the stay (1), and a fixed surface, of the stay (1), which is fixed to the door.

2. The door mirror assembly according to claim 1, wherein the stay (1) comprises a stay body (13) supporting the visor assembly (2); and a fixed plate (14) which is continuous with the stay body (13) and fixed to the door.

3. The door mirror assembly according to claim 2, wherein the holding means (13a) comprises a holding wall (13a) formed inside the stay body (13).

4. The door mirror assembly according to claim 2, wherein the holding means (13a) comprises a fixed plate (14) of the stay (1).

5. The door mirror assembly according to claim 2, wherein the holding means (13a) comprises a stand (4) provided inside the visor assembly (2) and fixed to the stay body (13).
